# EUROPEAN PATENT APPLICATION

(11) **EP 1 260 950 A2**
(43) Date of publication of application: **27.11.2002**
(21) Application number: 02076935.2
(22) Date of filing: 17.05.2002
(51) Int. Cl.: G08B 13/183

(54) **Infrared optical anti-intrusion barrier with a simplified wiring harness**

(30) Priority: 22.05.2001 IT MI20011076
(71) Applicant: Beghelli S.p.A., 40050 Monteveglio, Bologna (IT)
(72) Inventor: Beghelli, Gian Pietro, 40050 Monteveglio (Bologna) (IT)
(74) Representative: Coppo, Alessandro

(57) **Abstract**

An infrared optical anti-intrusion barrier with a simplified wiring harness, comprising two vertical self-supplied bars (11, 12) which create, when facing each other at a desired distance, an invisible barrier formed by beams (14, 14A-14D) of infrared light, whose crossing provokes an alarm; each bar (11, 12) includes an electronic control circuit (3), a battery (4) for a self-supply, and a series of transmitting and receiving modules (6; 6A-6D; 6E-6H) of an optical type, each of which mounts an emitting diode (7; 7A-7D; 7E-7H) and a receiving diode (8; 8A-8D; 8E-8H) of infrared light, with the respective focusing lenses.

## Description

This invention refers to an infrared optical anti-intrusion barrier with a simplified wiring harness.

The infrared optical barriers are currently used for the active protection of access openings, parts of gardens, access parkways, terraces etc.

The operating principle is based on the transmission, on the part of a transmitting element, of one or more beams of infrared light to a receiver; the transmitting and receiving elements are usually placed at the respective sides of the opening to be controlled, and the interruption of the beams on the part of an intruder determines the activation of an alarm.

A limit to the diffusion of such devices is to be imputed to the difficulty of installation, caused mainly by the need of connecting the transmitting and receiving devices to the electronic control circuits by a bundle of electrical cables, an operation which calls, especially in buildings where no arrangements for the necessary structures have been made, for long installation times and which not always determines esthetically acceptable solutions.

The scope of this invention is therefore to obviate the drawbacks mentioned above, and in particular, to produce an infrared optical anti-intrusion barrier, capable of allowing the activation of an alarm at the moment an ill-intentioned person may cross it, thus implementing an anti-intrusion function having the same operating characteristics of the barriers of a traditional type, without needing to provide any electrical connection, neither between the transmitting and receiving element nor to a remote station.

Another scope of this invention is to point out an optical anti-intrusion barrier capable of allowing its installation in essentially short spans of time, with respect to the known art, even on the part of non qualified or non specialized personnel.

A further scope of this invention is to produce an infrared optical anti-intrusion barrier with a simplified wiring harness, capable of achieving an extremely pleasant esthetic solution with respect to the barriers of a traditional type.

Not the last scope of the invention is to produce an infrared optical anti-intrusion barrier with a simplified wiring harness, at relatively moderate costs, based on the advantages secured.

These scopes are achieved by pointing out an infrared optical anti-intrusion barrier with a simplified wiring harness according to claim 1, which is being referred to for brevity.

In an advantageous manner, the infrared optical barrier according to the invention can be utilized as an external protection of door and window frames, for the purpose of preventively avoiding not only the undesired intrusion, but also the protection of the door and window frames themselves, which are rendered unapproachable by the ill-intentioned.

Similarly, the barrier may be utilized as a peripheral summer protection of lived-in villas and apartments, under conditions of doors and windows left open for aerating the premises.

In any case, the detector promptly signals the intrusion by sounding the alarm, while guaranteeing an extremely low probability of false alarms and leaving the occupants free to circulate within the protected premises, without risking false actuations of the alarm signal.

Moreover, the optical barrier in question may be utilized as a protection of parts of gardens, access parkways, porches and private areas, in which an access opening can be delimited.

Further characteristics and advantages of an infrared optical anti-intrusion barrier with a simplified wiring harness will be better evident from the description and attached drawings to follow, supplied for purely exemplifying and non limiting purposes, in which:
- Figure 1A shows a prospective view of a single (transmitter or receiver) bar forming the optical anti-intrusion barrier with a simplified wiring harness, according to this invention;
- Figure 1B is partially sectionalized lateral view of the bar of Figure 1A;
- Figure 2 shows a schematic embodiment of the usage of the optical anti-intrusion barrier with a simplified wiring harness according to the invention;
- Figure 3 illustrates an block diagram of the operation of the single bar forming the optical barrier according to this invention;
- Figure 4 represents an operating diagram of the barrier according to the invention, during the transmission and reception of a single infrared anti-intrusion beam;
- Figures 4A, 4B and 4C represent the flow of a few signals at the inlet and outlet of the single bar forming the optical barrier according to the invention, under various operating conditions;
- Figure 5 shows the flow of the signals at the inlet and outlet of each bar forming the optical barrier according to the invention, in case of a tampering with one of the two installed bars;
- Figure 6A is a schematic example of the transmission and reception phases of the bars forming the optical barrier according to this invention;
- Figure 6B shows a schematic diagram of the flows of a temporal scanning sequence of the beams transmitted and received by the bars of the optical anti-intrusion barrier according to the invention;
- Figure 7 illustrates an example of an embodiment of a reception circuit utilized in the optical anti-intrusion barrier according to the invention.

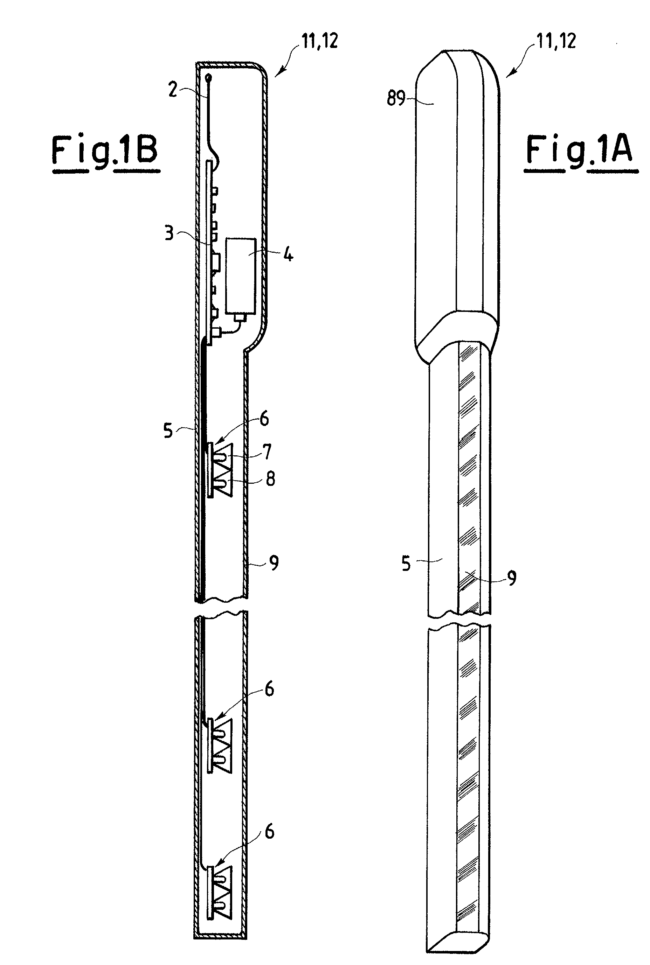

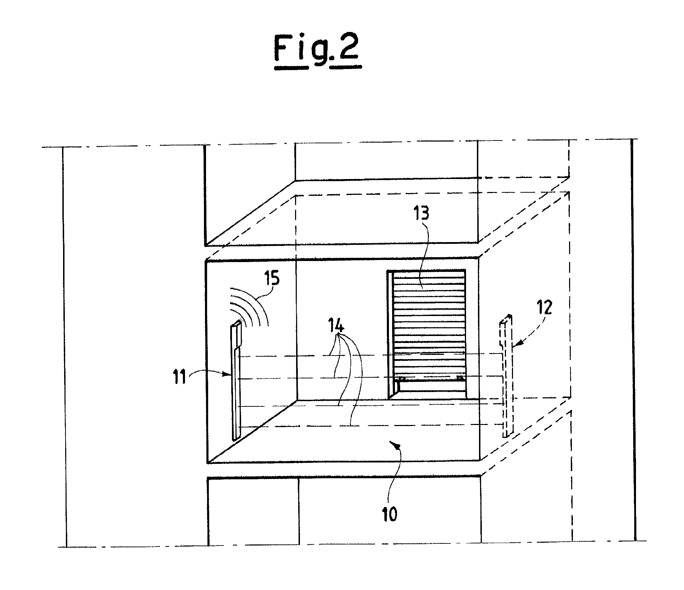

With particular reference to the Figures 1A, 1B and 2, an optical anti-intrusion barrier with a simplified wiring harness according to the invention comprises two vertical bars 11, 12 which, if installed facing each other at a desired distance, create a sort of invisible hindrance to the crossing of a series of infrared light beams 14; the crossing of such beams 14 provokes the occurrence of an alarm signal.

In particular, Figure 2 shows an applied example of the invention, according to which the two bars 11, 12 are fastened to the lateral walls of a terrace 10 of a building; the figure also highlights the door-window 13, which turn out to be protected by the optical anti-intrusion barrier.

At least one bar 11, 12 is equipped with an antenna 2 for the radio-wave transmission 15, by a transmitter 151, of the alarm signal to an anti-intrusion station eventually installed inside the home.

Each bar 11, 12 is formed by an extruded metallic profile 5 of a length depending on the particular model used and that may reach 1 meter, 1.5 or 2.0 meters.

The infrared beams 14 exit from the front side of the profile 5, covered by a plate 9 made of a material transparent to infrared beams, but not to the visible light (for instance, a plastic material).

A container 89 is fastened to one of the extremities of the bar 11, 12 , eventually formed by the extension of the bar 11, 12 itself, which houses the electronic control and operating circuits and the source of supply.

This container 89 may be produced from plastic materials and exhibits such a form and characteristics as to offer great strength, capable of guaranteeing the utmost protection against vandalisms or burglaries.

Figure 1B make it possible to identify the components of each bar 11, 12, which comprise, in particular, an electronic circuit 3, the antenna 2 of the radio transmitter 151, a battery 4 for self-supply and a series of optical transmitting and receiving modules 6, each of which mounts an infrared emitting diode 7 and an infrared receiving diode 8, with the respective focusing lenses.

As described in detail in the following treatment, each bar 11, 12 further contains appropriate electromechanical sensors, capable of preventing the opening of the enclosure and the complete removal of the same; it is moreover possible to provide for the installation of a vibration detector, capable of sounding an alarm in case of an attempt to destroy it by percussions.

The battery 4 is for instance, a 3.6 V, 5Ah lithium type and guarantees an autonomy of at least 3-4 years of operation under normal conditions.

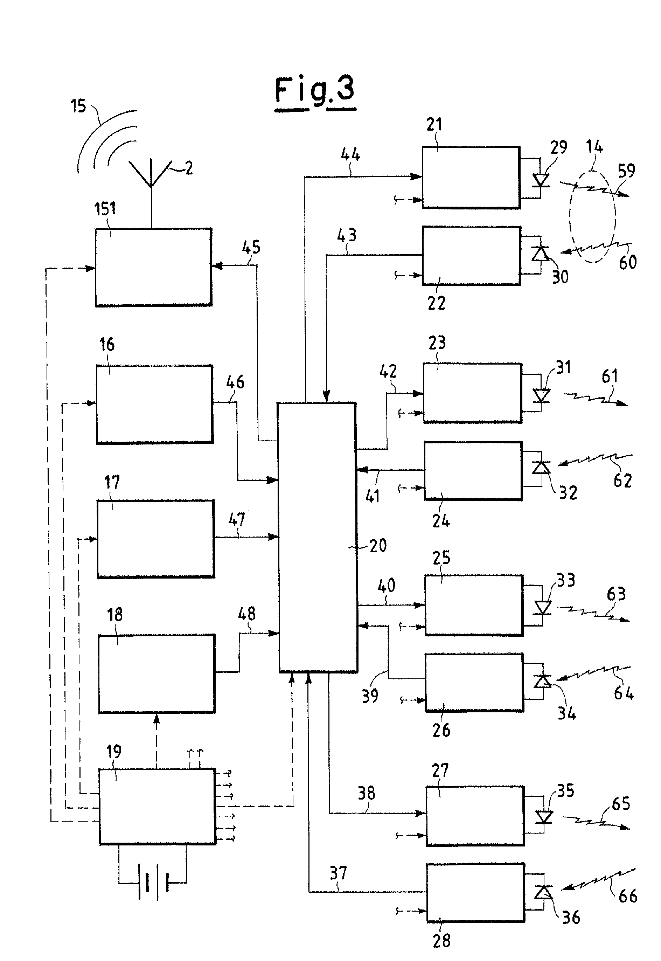

The two bars 11, 12 are of an identical construction, and one of the two assumes a "master" role (the barrier indicated by 11 in the figures, according to the embodied, yet non limiting example relating to this description), in taking the initiative of generating the flashes of infrared light emitted to control the opening, while the bar 12, of a "slave" type, limits itself to retransmit to the "master" bar 11 the delayed echo of the flashes of infrared light received from the "master" bar 11 itself; in some exemplifying and preferred yet non limiting forms of embodiment of the invention and for the purpose of limiting the overall production costs, only the "master" bar 11 may have the radio transmitter 151. Figure 3 shows the operating block diagram of one of the bars 11, 12 forming the optical anti-intrusion barrier according to the invention, and in particular offers the block diagram of a "master" type bar 11.

Similarly, the "slave" type bar 12 presents an operating block diagram similar to that of the "master" type bar 11, except for the fact that said "slave" bar 12 does not require a radio transmitter 151.

The block diagram of Figure 3 refers to a bar 11 for the transmission and reception of four infrared beams 14 useful for the detection.

Each useful beam is produced with a double infrared beam, in the sense that for each useful beam it is necessary to produce a outgoing flash generated by the "master" bar 11 and received by the "slave" bar 12, and a returning flash generated by the "slave" bar 12 and received by the "master" bar 11.

The operation of the bar 11, 12 is governed by a low power consumption microprocessor 20, which generates the control impulses 44, 42, 40, 38 of the various flashes and analyzes the signals 43, 41, 39, 37 received from the various receiving diodes 30, 32, 34, 36 of each infrared beam 14, for each of which the signal is processed by an appropriate receiver, respectively indicated by 22, 24, 26, 28 in the figures.

Each flash is generated by an infrared emitting diode 29, 31, 33 and 35, controlled by a respective amplifier 21, 23, 25 27.

Each pair constituted by an emitting diode and a receiving diode (for example, the pair formed by the emitting diode 29 and the receiving diode 30) forms one of the optical emitters and transmitters indicated by 6 in Figure 1B, in which the emitter and transmitter diodes are generically indicated by 7 and 8 and are mounted near to each other and at a short distance.

The whole of the bar 11, 12 comprises appropriate anti-removal circuits 16 and anti-opening circuits 17 formed by electromechanical switches and polarization networks; moreover, it is possible to incorporate a vibration sensor 18, for example of a very low consumption piezoelectric type.

The device is supplied by very low consumption supply circuits 19 which generate all the necessary voltages, while the radio transmitter 151 is of the "dual band" type, a double frequency band, in order to enhance the reliability of communicating the alarm signal.

In various exemplifying embodiments of the bar 11 it is possible to incorporate an alarm outlet device based on wires, for example a relay.

The operation of the optical anti-intrusion barrier with a simplified wiring harness, according to the invention, is described hereinafter.

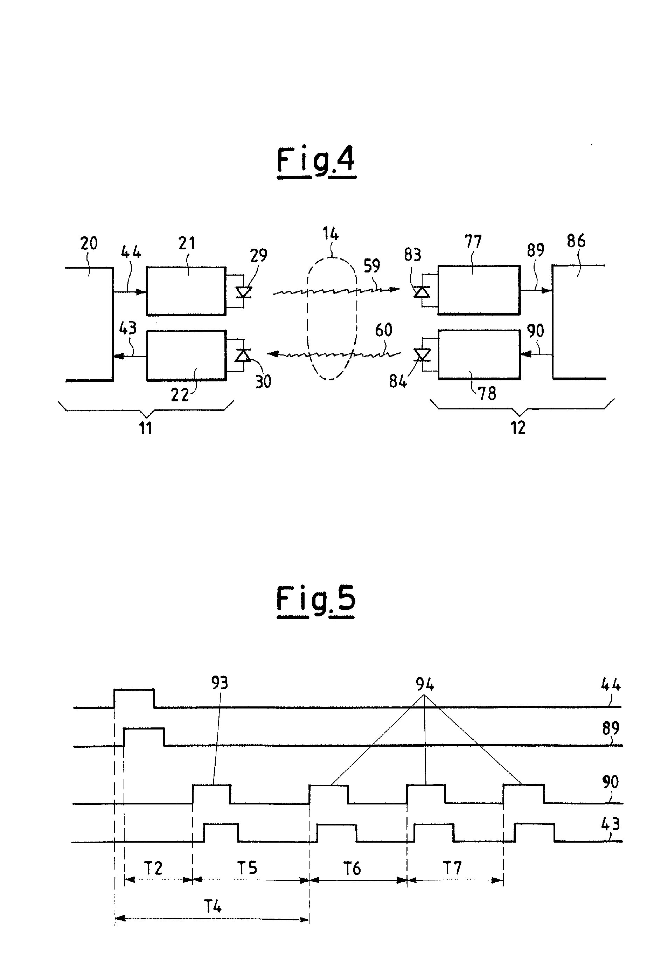

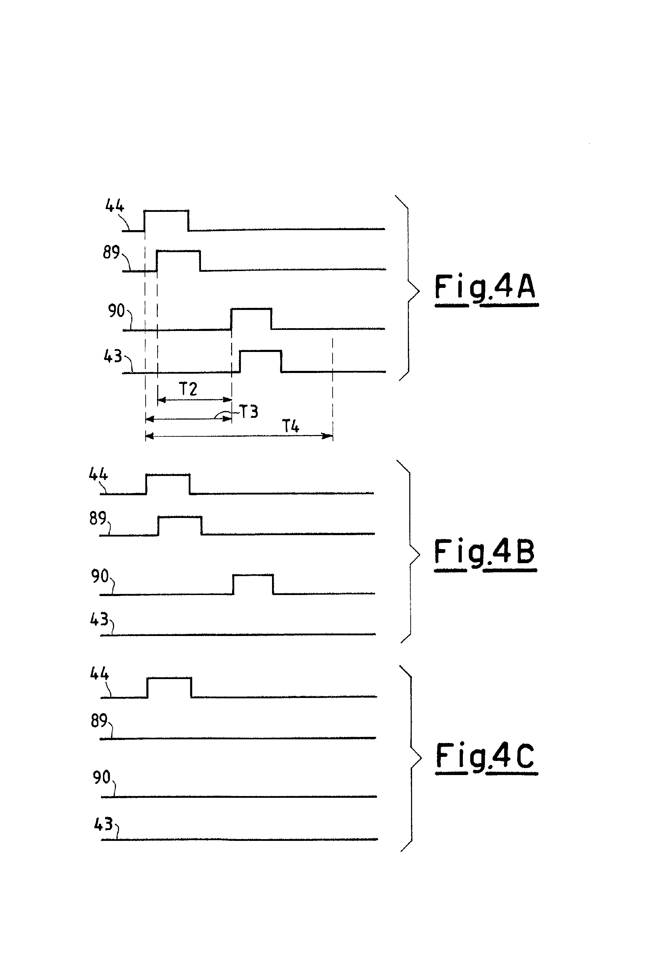

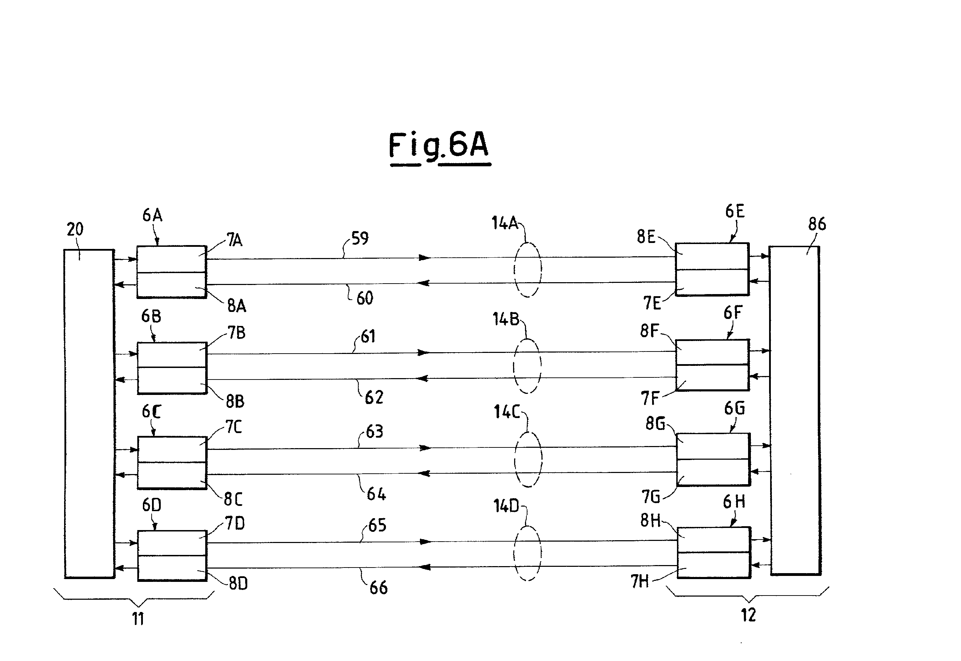

As evidenced in Figure 2, an object or a person which is non transparent to infrared light must, in order to reach the door window 13, cross the beams 14 spreading out between the two bars 11, 12; in reality, for each beam 14 there is a corresponding double infrared beam, associated to each optical transmitter and receiver 6 and respectively comprising the flashes (in the exemplifying case of four infrared beams forming the optical barrier according to the invention, a case exhaustively illustrated in Figures 3 and 6A) indicated by 59, 60 for the first virtual beam 14A, by 61, 62 for the second virtual beam 14B, by 63, 64 for the third virtual beam 14C and by 65, 66 for the fourth virtual beam 14D. Moreover, Figure 4 schematically shows one of the virtual beams 14, formed, in a particular and exemplifying manner, by the physical beams 59, 60; this figure clearly evidences the interaction between the optical transmitter and receiver group 6 of a "master" bar 11 and the optical transmitter and receiver group 6 of the "slave" bar 12, according to which the microprocessor 20 of the "master" bar 11 generates the impulse-bearing signal 44, which is in turn amplified by the group 21, and pilots the emitting diode 29 thus generating the flash or beam 59; the receiving diode 83, lined up with the transmitting diode 29, generates the signal 89 regenerated by the receiver 77, which may be analyzed by the microprocessor 86 of the "slave" bar 12.

This microprocessor 86, while synchronizing itself on the impulse 89, generates with a predetermined time delay T2 the impulse 90, which pilots the amplifier 78 of the returning beam 60, while controlling the emitting diode 84; at this point, the receiving diode 30, lined up with the emitter 84, pilots the receiver 22, which supplies the outlet impulse 43.

The microprocessor 20 of the "master" bar 11 analyzes the impulse 43 and controls receiving it not before a first predetermined time span T3 and not beyond a second predetermined time span T4; both time spans T3, T4 are calculated to start from the instant of the beginning of the impulse 44, generated by itself (see the graph in Figure 4A, relating to the normal operation of the barrier).

The synchronization of the "slave" bar 12 is guaranteed, because at its switching-on each emitting diode 7 of the "slave" bar 12 remains switched-off until it receives the first impulse; for every impulse received, the "slave" bar 12 answers with an echo impulse in the ways described.

The duration of the flashes emitted by the emitting bar 11 may for example be of a few hundredths of microseconds, for example 100 microseconds; the delay indicated by T2 in Figure 4A may for example be equal to 50 milliseconds and the time span T3 may for example have the same value of 50 milliseconds, while the value relating to the time span T4 must in any case turn out to be higher to the value relating to the time span T2; in particular, it suffices that T4 exceed T2 by a few times the duration of every single impulse (for instance, T4 may turn out to be equal to 51 milliseconds).

Figure 4B shows a series of wave forms of the signals in the case that an obstacle interrupts the returning beam 60 and that the microprocessor 20 of the "master" bar 11 no longer receives the echo of the "slave" bar 12. This absence is a cause for the activation of the alarm for the virtual beam 14 under consideration.

In a similar manner, Figure 4C represents the wave forms of the signals at the inlet and outlet of the amplifiers 21, 78 and of the receivers 22, 77 of the virtual beam 14; in this case, an alarm is generated for this virtual beam 14 due to the interruption of the physical beam 59 (outgoing beam) on the part of an obstacle, because the "slave" bar 12 is incapable of receiving the impulse generated by the "master" bar 11 and therefore stops the subsequent transmission of the impulse 90.

It is therefore evident that the interruption of any of the physical beams 59, 60 relating to a virtual beam 14 has the same effect at the terminals of the microprocessor 20 as the "master" bar 11, which finds the answer of the "slave" bar 12 to be missing and is capable of generating an alarm signal by appropriately controlling the radio transmitter 151.

According to this description, the optical barrier as an object of this invention provides for performing functions typical of traditional devices, without needing physical connections and further synchronizations between the bars 11, 12.

In an exemplifying yet not limiting form of embodiment of the invention, the "slave" bar 12 is not equipped with the radio transmitter 151 and therefore not capable of transferring, to an eventual system station the optical barrier may be connected to, the information about the tampering with each bar 11, 12 which constitute the barrier in question.

However, for the purpose of obviating this problem, the "slave" bar 12 may communicate an eventual information of tampering with the same, after processing by its own microprocessor 86, by an appropriate series of codified optical impulses transmitted by the emitting diode 84, in ways similar to the transmission of the echo answers previously described.

In particular, with reference to what is shown in the diagram of Figure 5, in can be shown that in case of a tampering of the "slave" bar 12, the "slave" bar 12 itself adds, at the signal 90, the impulses 94 to the returning impulse 93, for instance in a number of three, spaced out between them by predetermined time spans T6, T7; the first impulse of such a triplet is in any case generated after a predetermined time span T5, to start from the instant of the beginning of the impulse 93 of the answering signal 90.

The three impulses 94 are received by the microprocessor 20 of the "master" bar 11, which can, by decoding the sequence characterized by the number of impulses and by the characteristic time spans T5, T6 and T7, generate the signal of tampering and transmit it via radio waves 15, by the "dual band" transmitter 151, to a monitoring station.

In particular, the time span T5 must be such that T2+T5>T4 (for example, T5 may be equal to 3 milliseconds), while T6 and T7 may for example be equal to 1 millisecond; by this choice, for instance, the sequence codified for communicating the tampering stops after 50+3+1+1 = 55 milliseconds.

The coding may be rendered more complex, in case it is desired to increase the safety and reliability of the transmission of the information from the "slave" bar 12 to the "master" bar 11.

It is evident that a missed communication of the information from the "slave" bar 12 to the "master" bar 11, caused by an interruption of the virtual infrared beam 14 determines in any case an alarm, which, in case it remain permanently present (for instance for several hours) is interpreted by the "master" bar 11 as a tampering phenomenon or as a failure, and appropriately signaled via radio waves 15.

Therefore, even a damage of the "slave" bar 12, which may have been caused during a certain time span in which only the active protective function (anti-tampering) of the barrier is guaranteed, is in any case detected by the "master" bar 11 as a condition of prolonged alarm, and signaled to the station as an attempt at tampering or as a failure.

Figure 6A schematically shows, in case of a barrier based on four virtual beams 14A, 14B, 14C, 14D, the control sequence of the various optical transmitters and receivers 6A, 6B, 6C, 6D of the "master" bar 11, and of the optical transmitters and receivers 6E, 6F, 6G, 6H of the "slave" bar 12.

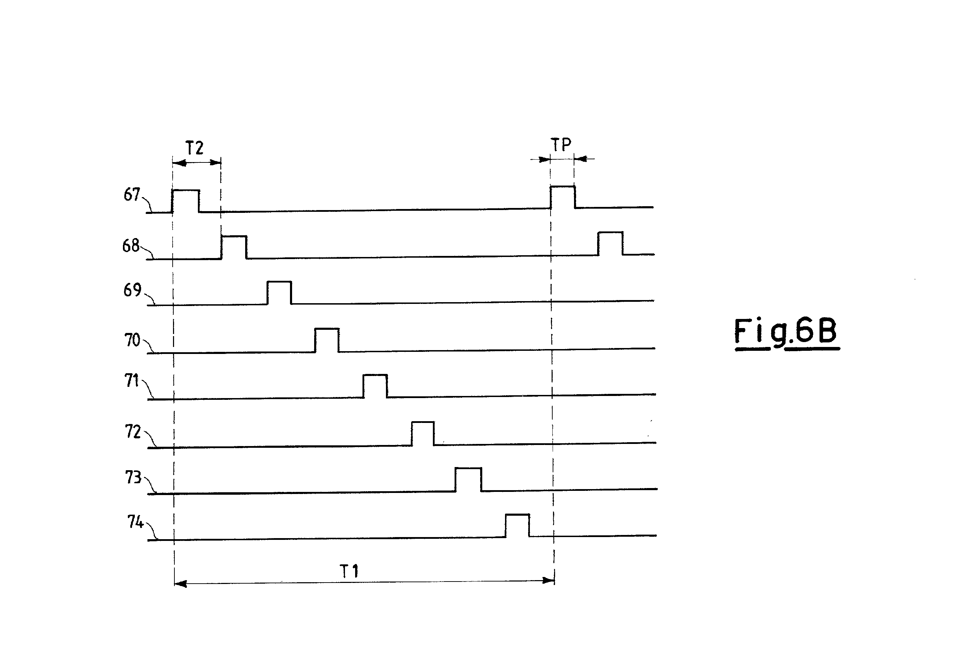

As shown in Figure 6B, it is evident that there is a time delay T2, equal for instance to 50 milliseconds, by which the "slave" bar 12 answers, for each virtual beam 14A, 14B, 14C, 14D, to the controls of the "master" bar 11. The "master" bar 11 scans the various transmitters or emitters 7A, 7B, 7C, 7D by the sequential controls relating to the impulse-bearing signals 67, 69, 71, 73.

The time span T1 during which the repetition of the impulse of every transmitter 7A-7H occurs is established based on energy considerations and on the maximum speed detectable in an object moving across a barrier, for instance T1 = 400 milliseconds; by this choice the impulses of the signals 67-74 relating to the transmitting or receiving devices 7A-7H, respectively, all turn out to be equally spaced out in time, including both those generated by the "master" bar 11 as well as those generated by the "slave" bar 12, thus resulting in an optimum time distribution of the electrical load on the supply battery 4.

The time between one impulse and the next is equal to 50 milliseconds and moreover the even spacing between the impulses also maximizes the probability, at equal scanning speed, that an object crossing all the virtual beams is detected, thus enhancing the safety of the detection.

The logic of generating the overall alarm signal and the scanning times are adjustable by the user based on the performances desired, because at least four different adjustments are possible.

For instance, in case a maximum safety is desired, at the expense of a maximum consumption and therefore a minimum lifetime of the battery 4, the alarm is generated by the interruption of at least one virtual beam 14A-14D, and the scanning times are reduced to T1 = 200 milliseconds and T2 = 25 milliseconds.

Alternatively, a medium-high safety and a minimum consumption is obtained in case the alarm is generated by the interruption of at least one virtual beam 14A-14D and the scanning times are those of a nominal value, meaning equal to T1 = 400 milliseconds and T2 = 50 milliseconds.

A good safety with a sensitivity to fast objects, but with the disadvantage of a high consumption, is obtained if the alarm is generated by the interruption of at least two virtual beams 14A-14D and the scanning times are reduced to T1 = 200 milliseconds and T2 = 25 milliseconds.

A good safety and limited consumption is obtained if the alarm is generated by the interruption of at least two virtual beams 14A-14D and the scanning times are those of a nominal value equal to T1 = 400 milliseconds and T2 = 50 milliseconds.

In the last two cases there is a good immunity to false alarms, thanks to the interruption of at least two virtual beams 14A-14D for generating the alarm; this condition is essential if the area to be protected is expected to be frequented by animals.

In a dimensioning example, the average electrical energy absorbed by each emitting diode 7, 7A-7H of the battery 4 is equal to Im = Ip* (Tp/T1), where Ip is the peak value of this current, Tp is the duration of the individual impulse and T1 is the period of repetition, as shown in Figure 6.

Assuming the values of this example, equal to Ip = 100 milli-amperes, Tp = 100 microseconds and T1 = 400 milliseconds, the resulting Im = 25 microamperes. The average consumption of the battery 4 is on the overall equal to four times this value, as each bar 11, 12 usually involves the installation of four emitting diodes 7A-7D, 7E-7H, and the average absorbed current will come to a total of 4 x 25 = 100 microamperes.

This average consumption is reflected in an energy consumption equal to 100 microamperes x 24 hours x 365 days = 0.876 Ah in one year; because the remaining circuits of the optical barrier of this invention exhibit an overall consumption below 50 microamperes, it can ultimately be demonstrated, as mentioned before, that a single lithium battery 4 of 3.6V, 5Ah allows each bar 11, 12 to operate for several years, without requiring any replacement.

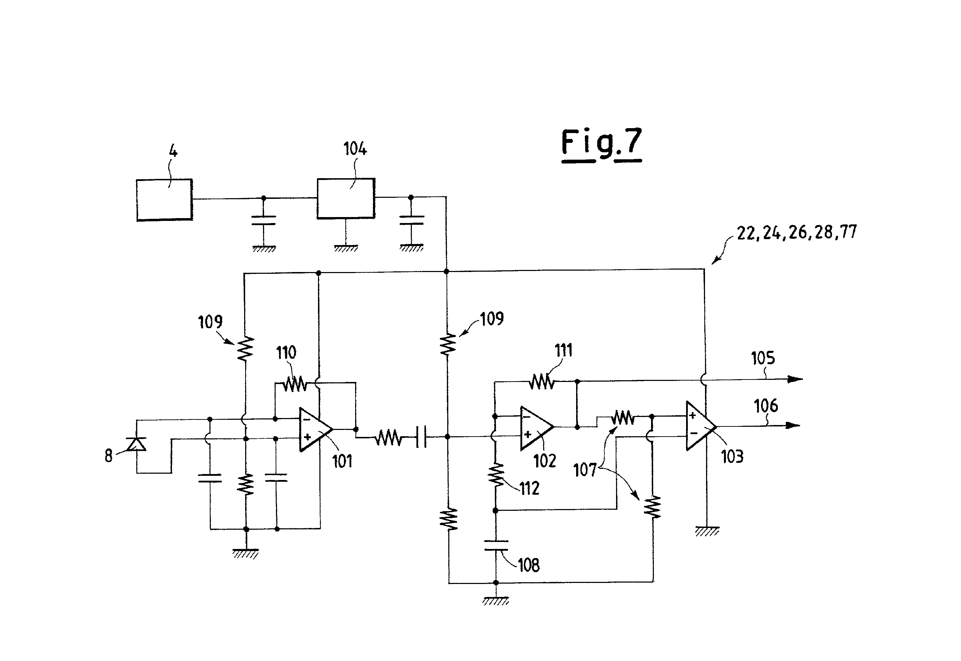

Figure 7 shows an example of an embodiment of one of the circuits 22, 24, 26, 28, 77 for analyzing the weak signals generated by the infrared receiving diodes 8. The circuit produces a configuration of a classic type, and comprises the receiving diode 8, a double amplifying stage produced by the operational units 101 and 102 and a comparator 103; thanks to the use of low consumption operational units, such as for instance the Texas Instruments unit OPA2349, of a low consumption comparator, such as for instance the National Semiconductor unit LMC7215, and of the polarization networks indicated by 109, produced by high value resistances as a result of the high inlet impedances of the operational units 101, 102, the overall consumption of the circuit in a resting mode is about 4 microamperes. The voltage regulator 104 is also operating at a very low resting current (below 1 microampere), for instance of a Seiko 81225SG type, with a 2.5 V outlet. The first operational stage 101 amplifies the current emitted by the receiving diode 8 and has a trans-resistance equal to the value of the resistance 110.

The second operational stage 102 is a non-inverting amplifier, whose gain is defined by the resistances 111 and 112.

The comparator 103, utilizing the voltage memorized on the condenser 108 as a reference value on its inverting inlet, discriminates only the fast impulse changes of the outlet voltage of the amplifying stages, meaning only those corresponding to the flashes of light received from the diode 8; in fact, the time constant determined by the resistances 112 and 111 and by the condenser 108 is far greater than the duration of the impulses corresponding to the light flashes. Finally, the divider 107 regulates the sensitivity threshold.

The important peculiarity of this configuration rests in the fact that it makes available, on the outlet 106 and at a very low consumption of current constant under all operating conditions, the impulses corresponding to the flashes of light received. The availability of impulses of this type, of a typical duration in the order of a hundred milliseconds, allows (by connecting the signal 106 to an interrupt inlet of the microprocessor 20) to awaken the mentioned microprocessor 20 only at the moment of receiving the impulse, while maintaining it at rest (in a "sleeping" mode) for the remaining period.

In this manner, even the consumption of the microprocessor can be kept at very low values, above all in the "slave" bar 12, where no other synchronous events for the awakening of the microprocessor exist.

The signal 105 may eventually be utilized in a version in which the microprocessor 20, having a analogical-digital converter of a rather fast type, may sample the wave form of the received signal at several points to improve its analysis, once the interrupt has awakened the processor itself.

The above description clarifies the characteristics as well as the resulting advantages of the infrared optical anti-intrusion barrier with a simplified wiring harness as an object of this invention.

In particular, these are represented by:
- the use of two active infrared bars which do not require any type of connection by electrical cables between each other nor to an external source of supply, or to an alarm station;
- each bar contains in its interior all the controlling electronics and the supply battery, and at least one of the two bars also contains a radio transmitter fitted with an antenna;
- the two bars synchronize themselves automatically, by exchanging infrared light impulses appropriately coded in time, and the interruption of one or more beams produces the alarm, because the communication between the two bars is missing;
- the bar eventually not equipped with a radio transmitter transmits to the other the information of tampering generated by itself, while appropriately coding a series of flashes emitted by its own emitting diodes;
- a possibility of regulating the scanning periodicity of the impulses and the activating logic of the alarm to optimize the operation based on its own requirements for achieving the best operating compromise;
- a low power consumption and a rechargeable battery supply capable of operating for a long time, also thanks to the scanning technology employed;
- the detector may be utilized during the summer period to alert whoever lives inside about the presence of an intruder approaching the door/window left open for aerating the building.

For this latter purpose, the detector is useful as an anti-intrusion device, for instance against nocturnal thieves climbing the terraces of buildings in the towns during the warm season.

The simplicity of installation, which does not require the lay-down of cables, considerably broadens the possibility of diffusing the optical barrier where the application of an alarm device of a traditional type would be extremely difficult.

Finally, it is evident that numerous variants can be applied to the optical anti-intrusion barrier as an object of this invention, without thereby abandoning the principles of novelty inherent in the inventive idea, just as it is clear that in the practical implementation of the invention, the materials, shapes and dimensions of the illustrated details may be of any kind depending on the requirements, and that the same may be substituted by others of a technically equivalent type.

## Claims

1. An infrared optical anti-intrusion barrier with a simplified wiring harness, comprising two vertical bars (11, 12) which, while facing each other at a predetermined distance, create an invisible barrier formed by infrared light beams (14), whose crossing provokes at least one alarm signal, **characterized in that** each of said vertical bars (11, 12) includes some electronic control circuits (3), at least one supply battery (4) and a series of transmitting and receiving modules (6; 6A-6D; 6E-6H) of an optical type, each of which mounts at least one emitting diode (7; 7A-7D; 7E-7H) and at least one receiving diode (8; 8A-8D; 8E-8H) of infrared light, with the respective focusing lenses.

2. An optical anti-intrusion barrier according to claim 1, **characterized in that** at least one bar (11, 12) comprises a transmitter (151) based on radio waves (15) equipped with a transmitting antenna (2) operating on a double frequency band to send the alarm signal to at least one monitoring station.

3. An optical anti-intrusion barrier according to claim 1, **characterized in that** each bar (11, 12) is formed by an extruded metallic profile (5), so that said infrared beams (14) exit from a front side of said profile (5), which is covered by a plate (9) of a material transparent to infrared beams but not transparent to visible light, where said electronic control circuits (3) and said supply battery (4) are housed inside a container (89) fastened to one extremity of the profile (5).

4. An optical anti-intrusion barrier according to claim 1, **characterized in that** each bar (11, 12) further contains electromechanical sensors (16, 17) capable of preventing the opening and complete removal of the bar (11, 12), and at least one vibration sensor (18) capable of signaling an alarm in case of an attempt to destroy it by percussive devices.

5. An optical anti-intrusion barrier according to claim 1, **characterized in that** said bars (11, 12) are produced with an identical construction and that a first (11) of said bars (11, 12) is utilized for generating flashes of infrared light emitted for controlling the passage of ill-intentioned persons through said barrier, while a second bar (12) is utilized for re-transmitting toward said first bar (11) a delayed echo signal of said flashes of infrared light received from said first bar (11).

6. An optical anti-intrusion barrier according to claim 5, **characterized in that** each of said beams (14) of infrared light useful for detection is formed by a first outgoing flash (59, 61, 63, 65) generated by said first bar (11) and received by said second bar (12), and by a second returning flash (60, 62, 64, 66) generated by said second bar (12) and received by said first bar (11).

7. An optical anti-intrusion barrier according to claim 6, **characterized in that** the operation of each of said bars (11, 12) is governed by a low power consumption microprocessor (20) which generates a series of control impulses (44, 42, 40, 38) of said flashes, and analyzes a series of signals (43, 41, 39, 37) received from said receiving diodes (8; 30, 32, 34, 36) of each infrared beam, for each of which the signal is processed by a receiving device (22, 24, 26, 28), where each of said flashes is generated by an infrared emitting diode (7; 29, 31, 33, 35), and controlled by a respective amplifying device (21, 23, 25, 27).

8. An optical anti-intrusion barrier according to claim 7, **characterized in that** said microprocessor (20) of said first bar (11) generates a first impulse (44) which is in turn amplified by an amplifying group (21) and pilots an emitting diode (29) by generating an outgoing flash (59), while a receiving diode (83) of said second bar (12), lined up with said emitting diode (29) of said first bar (11), generates a second impulse (89), regenerated by a receiving device (77) of said second bar (12), which is analyzed by a further microprocessor (86) of said second bar (12), which in turn, by synchronizing itself on said second impulse (89), generates with a predetermined time delay (T2) a third impulse (90) that pilots an amplifying group (78) of a returning flash (60) controlling an emitting diode (84) of said second bar (12), while a receiving diode (30) of said first bar (11), lined up with said emitting diode (84) of said second bar (12) pilots a receiving device (22) of said first bar (11), which supplies a fourth outgoing impulse (43).

9. An optical anti-intrusion barrier according to claim 8, **characterized in that** said microprocessor (20) of said first bar (11) analyzes said fourth impulse (43), controlling it so as not to receive it before a first predetermined time span (T3), and not beyond a second predetermined time span (T4), where said first and second predetermined time spans (T3, T4) are calculated to start from the beginning of the first impulse (44).

10. An optical anti-intrusion barrier according to claim 9, **characterized in that**, in case of a tampering with said second bar (12), said second bar (12) adds to an answering impulse (93) a series of impulses (94) spaced out between each other at predetermined time spans (T6, T7), of which a first impulse is generated after a predetermined time span (T5) starting from the instant of the beginning of said answering impulse (93), where said series of impulses (94) are received by the microprocessor (20) of said first bar (11), which, by decoding a series of characteristic sequences, is capable of generating a signal of tampering and to transmit it, by using said transmitter (151), to said monitoring station.

11. An optical anti-intrusion barrier according to claim 10, **characterized in that** at least one missing communication of information from said second bar (12) to said first bar (11), caused by at least one interruption of the infrared beam (14), determines an alarm signal about the crossing of the barrier on the part of at least one individual, or about a tampering, a damage and/or a failure.

12. An optical anti-intrusion barrier according to claim 7, **characterized in that** each receiving device (22, 24, 26, 28, 77) of each bar (11, 12) comprises a double amplifying stage (101, 102, 103) coupled with polarizing networks (109), a voltage regulator (104) and a divider (107) for regulating the sensitivity threshold, where said amplifying stage (101, 102, 103) includes at least one comparator, which utilizes a voltage value memorized on a condenser (108) as a reference value on its inverting inlet, so as to discriminate only the rapid impulse changes of the outlet voltage of the amplifying stages (101, 102, 103) corresponding to the infrared light flashes received from each receiving diode (8; 8A-8D; 8E-8H).
